# EUROPEAN PATENT APPLICATION

(11) **EP 4 563 911 A1**
(43) Date of publication of application: **04.06.2025**
(21) Application number: 23845310.4
(22) Date of filing: 10.07.2023
(51) Int. Cl.: F24F 11/871, F24F 13/22

(54) **MULTI-SPLIT AIR CONDITIONER AND METHOD FOR CONTROLLING SAME, CONTROLLER, AND STORAGE MEDIUM**

(30) Priority: 28.07.2022 CN 202210897250
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: PENG, Zhen, Foshan, Guangdong 528311 (CN); TAO, Kui, Foshan, Guangdong 528311 (CN); SHANG, Yahao, Foshan, Guangdong 528311 (CN)
(74) Representative: Ran, Handong
(86) International application number: PCT/CN2023/106564
(87) International publication number: WO 2024/022097

(57) **Abstract**

A multi-split air conditioner and a method for controlling same, a controller, and a storage medium. The method for controlling the multi-split air conditioner comprises the following steps: in a cooling mode, acquiring indoor unit capacity and an evaporator reference temperature of a target indoor unit, wherein the target indoor unit is one or more of a plurality of indoor units (220) (S100); and when the indoor unit capacity is less than or equal to preset capacity, controlling the rotation speed of a fan of an outdoor unit (210) according to the evaporator reference temperature (S200).

## Description

### CROSS-REFERENCE TO RELATED APPLICATION

This application claims priority to a Chinese patent application No. 202210897250.4, filed on July 28, 2022 and entitled "MULTI-SPLIT AIR CONDITIONER AND METHOD FOR CONTROLLING SAME, CONTROLLER, AND STORAGE MEDIUM", the entire contents of which are incorporated herein by reference.

### TECHNICAL FIELD

The present application relates to the technical field of air conditioners, in particular to a multi-split air conditioner, a control method thereof, a controller, and a storage medium.

### BACKGROUND

At present, a multi-split air conditioner includes one outdoor unit and a plurality of indoor units. The heat exchange capacity of an outdoor heat exchanger and the displacement of a compressor are designed to be significantly greater than the demand of a single indoor unit. Therefore, when only a few indoor units are activated, even after reducing the frequency of the compressor and the opening of an electronic expansion valve, the energy supplied by the outdoor unit still exceeds the demand of the activated indoor units. This results in a low air outlet temperature of the activated indoor units, leading to issues like condensation.

### SUMMARY

The present application aims to at least partially solve one of the problems existing in the related art. To this end, the present application provides a multi-split air conditioner, a control method thereof, a controller, and a storage medium, which can reduce the occurrence of condensation in indoor units when only a few indoor units are activated.

In accordance with a first aspect of the present application, an embodiment provides a control method of a multi-split air conditioner, the multi-split air conditioner includes an outdoor unit and a plurality of indoor units, and the control method includes: in a cooling mode, acquiring an indoor unit capacity and an evaporator reference temperature of target indoor unit(s), the target indoor unit(s) including one or more of the plurality of indoor units; and in response to the indoor unit capacity being less than or equal to a predefined capacity, controlling a fan speed of the outdoor unit based on the evaporator reference temperature.

The control method of the multi-split air conditioner according to the embodiment of the present application has at least the following beneficial effects. For a multi-split air conditioner, when the total indoor unit capacity of target indoor units with capacity demand is less than or equal to a predefined capacity, the energy provided by an outdoor unit will still exceed the demand of the target indoor units. Therefore, to reduce the occurrence of condensation in the indoor units, the embodiment of the present application controls the fan speed of the outdoor unit based on the evaporator reference temperature. By adjusting the fan speed of the outdoor unit, the heat exchange capacity of the outdoor unit can be lowered, which in turn reduces the cooling capacity of the indoor units, thereby decreasing the likelihood of condensation.

According to some embodiments of the present application, the controlling a fan speed of the outdoor unit based on the evaporator reference temperature includes one of the following steps:
determining a key indoor unit from the target indoor unit(s) and acquiring an air delivery speed and indoor environmental parameters corresponding to the key indoor unit, and in response to the air delivery speed being less than a preset speed and the indoor environmental parameters aligning with preset environmental parameters, controlling the fan speed of the outdoor unit based on the evaporator reference temperature;
determining a key indoor unit from the target indoor unit(s) and acquiring an air delivery speed corresponding to the key indoor unit, and in response to the air delivery speed being less than a preset speed, controlling the fan speed of the outdoor unit based on the evaporator reference temperature; or
determining a key indoor unit from the target indoor unit(s) and acquiring indoor environmental parameters corresponding to the key indoor unit, and in response to the indoor environmental parameters aligning with preset environmental parameters, controlling the fan speed of the outdoor unit based on the evaporator reference temperature.

According to some embodiments of the present application, the determining a key indoor unit from the target indoor unit(s) includes at least one of the following steps:
when the target indoor unit includes one indoor unit, taking the target indoor unit as the key indoor unit; or
when the target indoor units include a plurality of the indoor units, acquiring each indoor environment humidity corresponding to the individual target indoor units, and selecting the indoor unit having a highest indoor environment humidity as the key indoor unit.

According to some embodiments of the present application, in the case of acquiring indoor environmental parameters corresponding to the key indoor unit, the acquiring indoor environmental parameters corresponding to the key indoor unit includes: acquiring an indoor environment temperature and an indoor environment humidity corresponding to the key indoor unit;
the indoor environmental parameters aligning with preset environmental parameters includes one of the following conditions:
the indoor environment temperature being greater than a preset temperature and the indoor environment humidity being greater than a preset humidity;
the indoor environment temperature falling within a target temperature range and the indoor environment humidity is greater than a preset humidity, the target temperature range including an outdoor environment temperature; or
the indoor environment temperature being greater than a preset temperature and falling within a target temperature range, and the indoor environment humidity being greater than a preset humidity, the target temperature range including an outdoor environment temperature.

According to some embodiments of the present application, before acquiring an indoor unit capacity and an evaporator reference temperature of target indoor unit(s), the control method includes: acquiring an indoor environment temperature and an indoor set temperature corresponding to each of the indoor units, and calculating a temperature difference between the indoor environment temperature and the indoor set temperature; and taking all indoor units with the temperature difference exceeding a preset threshold as target indoor units.

According to some embodiments of the present application, determining the predefined capacity includes: acquiring an outdoor unit capacity of the outdoor unit; and determining the predefined capacity according to the outdoor unit capacity.

According to some embodiments of the present application, controlling a fan speed of the outdoor unit based on the evaporator reference temperature includes at least one of the following steps:
in response to the evaporator reference temperature being less than or equal to a first preset reference temperature and meanwhile greater than or equal to a second preset reference temperature, maintaining the fan speed of the outdoor unit, the first preset reference temperature being higher than the second preset reference temperature;
in response to the evaporator reference temperature being greater than the first preset reference temperature, increasing the fan speed of the outdoor unit; or
in response to the evaporator reference temperature being less than the second preset reference temperature, decreasing the fan speed of the outdoor unit.

According to some embodiments of the present application, the control method includes one of the followings:
in the case of increasing the fan speed of the outdoor unit, the increasing the fan speed of the outdoor unit includes: increasing the fan speed of the outdoor unit by a speed adjustment step in every preset interval; or
in the case of decreasing the fan speed of the outdoor unit, the decreasing the fan speed of the outdoor unit includes: decreasing the fan speed of the outdoor unit by a speed adjustment step in every preset interval.

In accordance with a second aspect of the present application, an embodiment further provides a controller, including: a memory, a processor, and a computer program stored in the memory and executable by the processor, and when the processor executes the computer program, the control method of the multi-split air conditioner described in the first aspect is implemented.

In accordance with a third aspect of the present application, an embodiment further provides a multi-split air conditioner, including the controller described in the second aspect.

In accordance with a fourth aspect of the present application, an embodiment further provides a computer-readable storage medium storing computer-executable instructions, and the computer-executable instructions are configured to enable a computer to implement the control method of the multi-split air conditioner described in the first aspect.

Additional aspects and advantages of the present application will be set forth in part in the following description, and in part will be apparent from the following description, or may be learned by practice of the present application.

### BRIEF DESCRIPTION OF DRAWINGS

The accompanying drawings are used to provide further understanding of the technical schemes of the present application and constitute a part of the description. The accompanying drawings are used to explain the technical schemes of the present application together with the embodiments of the present application, and do not constitute a limitation on the technical schemes of the present application.
FIG. 1 is a schematic diagram of a system architecture platform for executing a control method of a multi-split air conditioner according to an embodiment of the present application;
FIG. 2 is a schematic diagram of a multi-split air conditioner according to an embodiment of the present application;
FIG. 3 is a flowchart of a control method of a multi-split air conditioner according to an embodiment of the present application;
FIG. 4 is a flowchart of another control method of a multi-split air conditioner according to an embodiment of the present application;
FIG. 5 is a flowchart of another control method of a multi-split air conditioner according to an embodiment of the present application;
FIG. 6 is a flowchart of another control method of a multi-split air conditioner according to an embodiment of the present application;
FIG. 7 is a flowchart of another control method of a multi-split air conditioner according to an embodiment of the present application;
FIG. 8 is a flowchart of another control method of a multi-split air conditioner according to an embodiment of the present application;
FIG. 9 is a flowchart of another control method of a multi-split air conditioner according to an embodiment of the present application;
FIG. 10 is a flowchart of another control method of a multi-split air conditioner according to an embodiment of the present application;
FIG. 11 is a flowchart of another control method of a multi-split air conditioner according to an embodiment of the present application;
FIG. 12 is a flowchart of another control method of a multi-split air conditioner according to an embodiment of the present application;
FIG. 13 is a flowchart of another control method of a multi-split air conditioner according to an embodiment of the present application;
FIG. 14 is a flowchart of another control method of a multi-split air conditioner according to an embodiment of the present application;
FIG. 15 is a flowchart of another control method of a multi-split air conditioner according to an embodiment of the present application;
FIG. 16 is a flowchart of another control method of a multi-split air conditioner according to an embodiment of the present application;
FIG. 17 is a flowchart of another control method of a multi-split air conditioner according to an embodiment of the present application;
FIG. 18 is a flowchart of another control method of a multi-split air conditioner according to an embodiment of the present application; and
FIG. 19 is an overall flowchart of a control method of a multi-split air conditioner according to an embodiment of the present application.

### DETAILED DESCRIPTION OF EMBODIMENTS

Embodiments of the present application will be discussed in detail below. Examples of the embodiments are illustrated in the accompanying drawings, where the same or like reference numerals throughout the figures indicate the same or like elements having the same or like functions. The embodiments described below with reference to the accompanying drawings are exemplary and are intended only to explain the present application instead of being construed as limiting the present application.

In the description of the present application, it should be understood that, descriptions relating to orientation, for example, orientation or positional relationships indicated by up, down, front, rear, left, right, etc. are based on the orientation or positional relationships shown in the accompanying drawings, and are to facilitate the description of the present application and simplify the description only, rather than indicating or implying that the device or element referred to must have a specific orientation or be constructed and operated in a specific orientation, and therefore cannot be construed as limiting the present application.

In the description of the present application, the meaning of "several" is one or more; the meaning of "a plurality of" is two or more; "greater than", "less than", "more than", etc. are to be construed as excluding a given figure; and "above", "below", "within", etc. are to be construed as including a given figure. If "first" and "second", etc. are referred to, it is only for the purpose of distinguishing technical features, and shall not be construed as indicating or implying relative importance or implying the number of the indicated technical features or implying the sequence of the indicated technical features.

In the description of the present application, unless otherwise explicitly defined, the terms such as "arrange", "install", and "connect" should be construed in a broad sense, and those skilled in the art can determine the specific meanings of the above terms in the present application in a rational way in conjunction with the specific contents of the technical schemes.

In some cases, a multi-split air conditioner includes one outdoor unit and a plurality of indoor units, and the ratio of the outdoor unit capacity to the indoor unit capacity can range from 0.3 to 1.9. Therefore, the heat exchange capacity of an outdoor heat exchanger and the displacement of a compressor are designed to be significantly greater than the demand of a single indoor unit. Therefore, when only a few indoor units are activated on function in such as draft-free mode, gentle breeze mode, or anti-direct-blow mode, even after reducing the frequency of the compressor and the opening of an electronic expansion valve, the energy supplied by the outdoor unit still exceeds the demand of the indoor units. This results in a low air outlet temperature of the activated indoor units, leading to issues like condensation.

In view of this, the embodiments of the present application provide a multi-split air conditioner, a control method thereof, a controller, and a computer-readable storage medium, which can reduce the heat exchange capacity of the outdoor unit by adjusting the fan speed of the outdoor unit when a small number of indoor units is operating, which in turn reduces the cooling capacity of the indoor units, thereby decreasing the likelihood of condensation.

The embodiments of the present application will be further explained below with reference to the accompanying drawings.

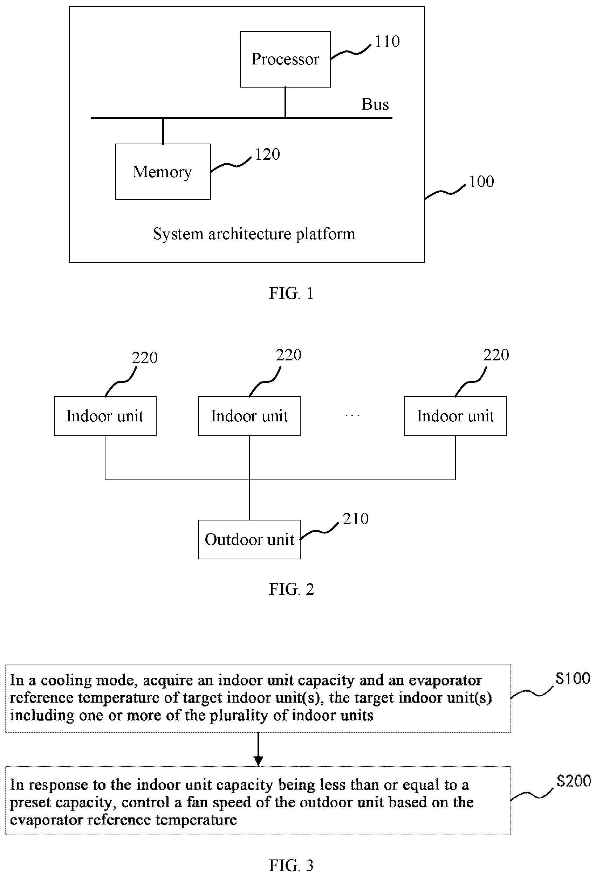

Referring to FIG. 1, it is a schematic diagram of a system architecture platform for executing a control method of a multi-split air conditioner according to an embodiment of the present application.

The system architecture platform 100 of the embodiment of the present application may include more than one processor 110 and memory 120. In FIG. 1, one processor 110 and one memory 120 are shown as an example.

The processor 110 and the memory 120 may be connected by a bus or in other ways. In FIG. 1, the connection is realized by a bus for example.

As a non-transitory computer-readable storage medium, the memory 120 may be configured to store a non-transitory software program and a non-transitory computer-executable program. In addition, the memory 120 may include a high-speed random access memory and a non-transitory memory, for example, at least one of a magnetic disk storage device, a flash memory device, or another non-transitory solid-state storage device. In some implementations, the memory 120 may include a plurality of memories 120 remotely located with respect to the processor 110, and these remote memories may be connected to the system architecture platform 100 via a network. Examples of the above-mentioned network include, but are not limited to, the Internet, an intranet, a local area network, a mobile communication network, or a combination thereof.

It can be understood by those of ordinary skill in the art that the device structure shown in FIG. 1 does not constitute a limitation to the system architecture platform 100, and may include more or fewer components, or it is possible to combine certain components or provide a different component arrangement.

In the system architecture platform 100 shown in FIG. 1, the processor 110 may be configured to call a control program of the multi-split air conditioner stored in the memory 120, thereby implementing the control method of the multi-split air conditioner.

Based on a hardware structure of the system architecture platform 100 described above, various embodiments of the multi-split air conditioner of the present application are proposed.

Referring to FIG. 2, it is a schematic diagram of a multi-split air conditioner according to an embodiment of the present application.

In some embodiments, the multi-split air conditioner includes, but not limited to, an outdoor unit 210 and a plurality of indoor units 220, each indoor unit 220 is designated with a corresponding indoor unit capacity, and the outdoor unit 210 is configured with a corresponding outdoor unit capacity.

In some embodiments, the indoor unit 220 may further be provided with a temperature sensor for detecting an evaporation temperature of an evaporator. In addition, the indoor unit 220 in this embodiment of the present application may further be provided with a temperature sensor for detecting indoor air temperature and a humidity sensor for detecting indoor air humidity.

It is understood that the temperature sensor may be a thermocouple temperature sensor, a thermistor temperature sensor, a resistance temperature sensor, an IC temperature sensor, or other types of temperature sensors, which is not specifically limited in this embodiment of the present application.

It is also understood that the humidity sensor may be a capacitive humidity sensor or a resistive humidity sensor. Here, capacitive humidity sensors have a more linear response than resistive humidity sensors. Other types of humidity sensors may also be used, which is not specifically limited in this embodiment of the present application.

It should be noted that the multi-split air conditioner in this embodiment of the present application may include the processor and the memory shown in FIG. 1. Here, the processor may communicate with the indoor unit 220 and the outdoor unit 210, thereby implementing the control method of the multi-split air conditioner.

Based on hardware structures of the system architecture platform 100 and multi-split air conditioner described above, various embodiments of the control method of the multi-split air conditioner of the present application are proposed.

Refer to FIG. 3, it is a flowchart of a control method of a multi-split air conditioner according to an embodiment of the present application. The multi-split air conditioner in this embodiment of the present application includes, but not limited to, an outdoor unit and a plurality of indoor units, and the control method includes, but not limited to, step S100 and step S200.

At S100, in a cooling mode, an indoor unit capacity and an evaporator reference temperature of target indoor unit(s) are acquired. Here, the target indoor unit(s) includes one or more of the plurality of indoor units.

In some embodiments, since the problem to be solved is the occurrence of condensation in the indoor unit, which may happen in a cooling mode, this embodiment of the present application specifically focuses on the control method of the multi-split air conditioner operating in the cooling mode.

It is understood that the dehumidification mode is also considered a cooling mode. The difference is that the operating parameters of the air conditioner are subject to specific restrictions. Therefore, the control method of the multi-split air conditioner in this embodiment of the present application also applies to the dehumidification mode.

Additionally, the target indoor unit refers to an indoor unit that has a demand for capacity. Here, the capacity demand arises due to a difference between a set temperature of the indoor unit and an indoor environment temperature, indicating that the outdoor unit need to operate and provide enough work load, so that the indoor temperature meets user needs or functional requirements.

Additionally, the indoor unit capacity of the target indoor unit refers to the total indoor unit capacity of all indoor units with capacity demand. Here, the indoor unit capacity relates to the specific model of the indoor unit(s). The current indoor unit capacity of each indoor unit may be fixed or adjustable.

In addition, regarding the evaporator reference temperature of the target indoor unit, in response to the target indoor unit including a single indoor unit, the evaporator reference temperature is an evaporator temperature of the indoor unit. In response to the target indoor unit including a plurality of indoor units, the evaporator reference temperature may be an average value of evaporator temperatures of the plurality of indoor units, a median value of evaporator temperatures of the plurality of indoor units, or other reference values, which is not specifically limited in this embodiment of the present application.

Additionally, regarding the method of obtaining the evaporator temperature of the target indoor unit, a temperature sensor may be added at the location of an evaporator of the indoor unit, allowing for the collection of the evaporator temperature of the indoor unit through the temperature sensor. Here, the temperature sensor may be a thermocouple temperature sensor, a thermistor temperature sensor, a resistance temperature sensor, an IC temperature sensor, or other types of temperature sensors, which is not specifically limited in this embodiment of the present application.

At S200, in response to the indoor unit capacity being less than or equal to a predefined capacity, a fan speed of the outdoor unit is controlled based on the evaporator reference temperature.

In some embodiments, the predefined capacity may be manually set in advance. Here, the specific value of the predefined capacity may be set based on the capacity of the outdoor unit or the capacity of the indoor unit, which is not specifically limited in this embodiment of the present application.

In addition, the comparison between the indoor unit capacity and the predefined capacity may be determined by the number of target indoor units. For example, if each indoor unit has the same indoor unit capacity and the predefined capacity equals the total indoor unit capacity of two indoor units, then when the number of target indoor units is one or two, it can be considered that the indoor unit capacity of the target indoor units is less than or equal to the predefined capacity; or when the number of target indoor units is three or more, it can be considered that the indoor unit capacity of the target indoor units is greater than the predefined capacity.

Additionally, the method of controlling the fan speed of the outdoor unit based on the evaporator reference temperature may include, but not limited to, the following steps: in response to the evaporator reference temperature being too high, which may indicate that the cooling effect of the indoor unit is poor, in this case, the fan speed of the outdoor unit is appropriately increased; and in response to the evaporator reference temperature being too low, which may indicates that the indoor unit may experience condensation or that the cooling effect of the indoor unit is too strong, in this case the fan speed of the outdoor unit is appropriately decreased.

According to the above steps S100 and S200, for a multi-split air conditioner, when the total indoor unit capacity of target indoor units with capacity demand is less than or equal to a predefined capacity, the energy provided by an outdoor unit will still exceed the demand of the target indoor units. Therefore, to reduce the occurrence of condensation in the indoor units, the embodiment of the present application controls the fan speed of the outdoor unit based on the evaporator reference temperature. By adjusting the fan speed of the outdoor unit, the heat exchange capacity of the outdoor unit can be lowered, which in turn reduces the cooling capacity of the indoor units, thereby decreasing the likelihood of condensation.

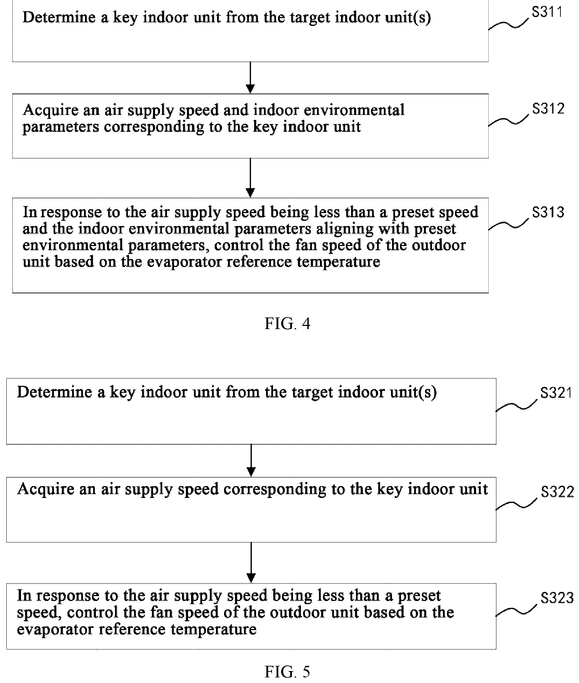

Additionally, it should be noted that controlling a fan speed of the outdoor unit based on the evaporator reference temperature in S200 may include, but not limited to, three implementation scenarios illustrated in FIG. 4 to FIG. 6.

Referring to FIG. 4, it is a flowchart of another control method of a multi-split air conditioner according to an embodiment of the present application. Controlling a fan speed of the outdoor unit based on the evaporator reference temperature in S200 may include, but not limited to, step S311, step S312 and step S313.

At S311, a key indoor unit is determined from the target indoor units.

At S312, an air delivery speed and indoor environmental parameters corresponding to the key indoor unit are acquired.

At S313, in response to the air delivery speed being less than a preset speed and the indoor environmental parameters aligning with preset environmental parameters, the fan speed of the outdoor unit is controlled based on the evaporator reference temperature.

In some embodiments, if it is possible to prevent condensation in the indoor units that are prone to it in the target indoor units, then it can naturally help prevent condensation in other indoor units that are less likely to experience it. To this end, this embodiment of the present application first identifies and selects a key indoor unit that is prone to condensation from the target indoor units. Then, the corresponding indoor environmental parameters and air delivery speed are obtained. In response to the indoor environmental parameters aligning with preset environmental parameters and the air delivery speed being below a preset speed, which indicates that the demand of the key indoor unit is low and that the key indoor unit is prone to condensation, in this case, this embodiment of the present application will control the fan speed of the outdoor unit based on the evaporator reference temperature.

It should be noted that the preset speed may be pre-defined, which is not specifically limited in this embodiment of the present application. Additionally, for this embodiment of the present application, if the air supply mode of the key indoor unit is set to draft-free mode, gentle breeze mode, or anti-direct-blow mode, it can be considered that the air delivery speed is lower than the preset speed.

In addition, it should be noted that the indoor environmental parameters may include, but are not limited to, indoor air temperature or indoor air humidity. Accordingly, the preset environmental parameters may include, but not limited to, preset indoor air temperature or preset indoor air humidity. Here, the specific values of the preset environmental parameters may be pre-defined, which is not specifically limited in this embodiment of the present application.

Referring to FIG. 5, it is a flowchart of another control method of a multi-split air conditioner according to an embodiment of the present application. Controlling a fan speed of the outdoor unit based on the evaporator reference temperature in S200 may include, but not limited to, step S321, step S322 and step S323.

At S321, a key indoor unit is determined from the target indoor units.

At S322, an air delivery speed corresponding to the key indoor unit is acquired.

At S323, in response to the air delivery speed being less than a preset speed, the fan speed of the outdoor unit is controlled based on the evaporator reference temperature.

In some embodiments, if it is possible to prevent condensation in the indoor units that are prone to it in the target indoor units, then it can naturally help prevent condensation in other indoor units that are less likely to experience it. To this end, this embodiment of the present application first identifies and selects a key indoor unit that is prone to condensation from the target indoor units. Then, the corresponding air delivery speed is obtained. In response to the air delivery speed being below a preset speed, which indicates that the demand of the key indoor unit is low and that the key indoor unit is prone to condensation, in this case, this embodiment of the present application will control the fan speed of the outdoor unit based on the evaporator reference temperature.

It should be noted that the preset speed may be pre-defined, which is not specifically limited in this embodiment of the present application. Additionally, for this embodiment of the present application, if the air supply mode of the key indoor unit is set to draft-free mode, gentle breeze mode, or anti-direct-blow mode, it can be considered that the air delivery speed is lower than the preset speed.

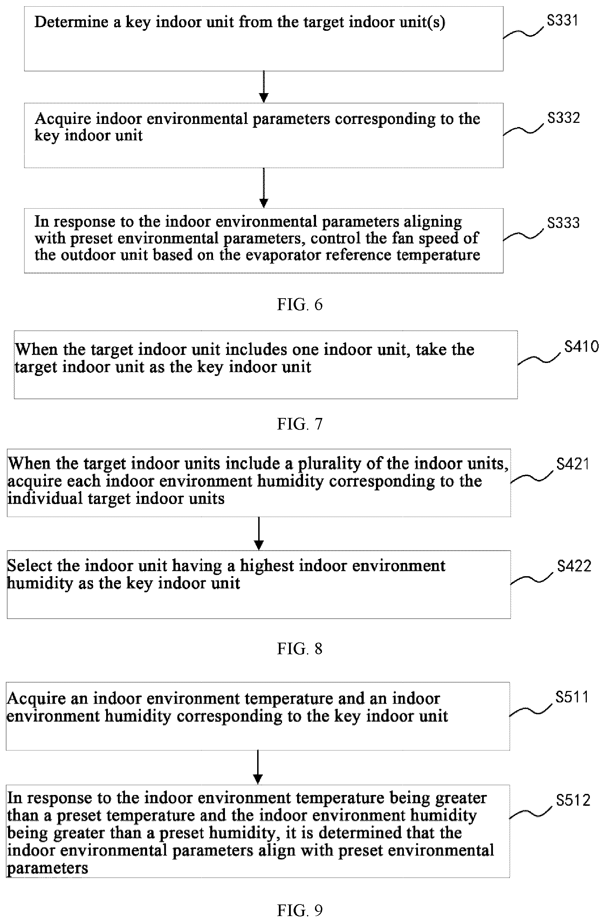

Referring to FIG. 6, it is a flowchart of another control method of a multi-split air conditioner according to an embodiment of the present application. Controlling a fan speed of the outdoor unit based on the evaporator reference temperature in S200 may include, but not limited to, step S331, step S332 and step S333.

At S331, a key indoor unit is determined from the target indoor units.

At S332, indoor environmental parameters corresponding to the key indoor unit are acquired.

At S333, in response to the indoor environmental parameters aligning with preset environmental parameters, the fan speed of the outdoor unit is controlled based on the evaporator reference temperature.

In some embodiments, if it is possible to prevent condensation in the indoor units that are prone to it in the target indoor units, then it can naturally help prevent condensation in other indoor units that are less likely to experience it. To this end, this embodiment of the present application first identifies and selects a key indoor unit that is prone to condensation from the target indoor units. Then, the corresponding indoor environmental parameters are obtained. In response to the indoor environmental parameters aligning with preset environmental parameters, which indicates that the demand of the key indoor unit is low and that the key indoor unit is prone to condensation, in this case, this embodiment of the present application will control the fan speed of the outdoor unit based on the evaporator reference temperature.

In addition, it should be noted that the indoor environmental parameters may include, but are not limited to, indoor air temperature or indoor air humidity. Accordingly, the preset environmental parameters may include, but not limited to, preset indoor air temperature or preset indoor air humidity. Here, the specific values of the preset environmental parameters may be pre-defined, which is not specifically limited in this embodiment of the present application.

Additionally, it should be noted that determining a key indoor unit from the target indoor unit(s) in S311, S321 and S331 may include, but not limited to, two implementation scenarios illustrated in FIG. 7 to FIG. 8.

Referring to FIG. 7, it is a flowchart of another control method of a multi-split air conditioner according to an embodiment of the present application. Determining a key indoor unit from the target indoor unit(s) in S311, S321 and S331 may include, but not limited to, step S410.

At S410, when the target indoor unit includes one indoor unit, the target indoor unit is taken as the key indoor unit.

Specifically, in response to the target indoor unit being a single indoor unit, this embodiment of the present application takes the said indoor unit as the key indoor unit.

Referring to FIG. 8, it is a flowchart of another control method of a multi-split air conditioner according to an embodiment of the present application. Determining a key indoor unit from the target indoor unit(s) in S311, S321 and S331 may include, but not limited to, step S421 and step S422.

At S421, when the target indoor units include a plurality of the indoor units, each indoor environment humidity corresponding to the individual target indoor units is acquired.

At S422, the indoor unit having the highest indoor environment humidity is selected as the key indoor unit.

In some embodiments, in response to the target indoor unit including a plurality of indoor units, this embodiment of the present application takes the indoor unit having the highest indoor environment humidity as the key indoor unit. If this embodiment of the present application can prevent condensation in the indoor unit having the highest indoor environment humidity, then it can also naturally help prevent condensation in other target indoor units.

It should be noted that the indoor unit in this embodiment of the present application may be provided with a humidity sensor for detecting indoor air humidity.

It is also understood that the humidity sensor may be a capacitive humidity sensor or a resistive humidity sensor. Here, capacitive humidity sensors have a more linear response than resistive humidity sensors, and other types of humidity sensors may also be used, which is not specifically limited in this embodiment of the present application.

Additionally, it should be noted that the method for obtaining the indoor environmental parameters, as well as the judgmental logic between the indoor environmental parameters and the preset environmental parameters in FIGS. 4 and 6, may include, but not limited to, three implementation scenarios shown in FIGS. 9 to FIG. 11.

Referring to FIG. 9, it is a flowchart of another control method of a multi-split air conditioner according to an embodiment of the present application. The method for obtaining the indoor environmental parameters, as well as the judgmental logic between the indoor environmental parameters and the preset environmental parameters in FIGS. 4 and 6, may include, but not limited to, step S511 and step S512.

At S511, an indoor environment temperature and an indoor environment humidity corresponding to the key indoor unit are acquired.

At S512, in response to the indoor environment temperature being greater than a preset temperature and the indoor environment humidity being greater than a preset humidity, it is determined that the indoor environmental parameters align with preset environmental parameters.

Specifically, to determine whether the key indoor unit is currently prone to condensation, this embodiment of the present application may collect an indoor environment humidity and an indoor environment temperature of the environment where the key indoor unit is located. In response to the indoor environment humidity being greater than a preset humidity and the indoor environment temperature being greater than a preset temperature, which indicates that the condensation temperature of the indoor air is relatively high, suggesting that the key indoor unit is likely to experience condensation. In this regard, this embodiment of the present application will control the fan speed of the outdoor unit based on the evaporator reference temperature to increase the evaporator temperature of the key indoor unit for preventing condensation of the key indoor unit while maintaining cooling efficiency.

Additionally, it should be noted that in response to the indoor environment humidity being below the preset humidity or the indoor environment temperature being below the preset temperature, which indicates that the condensation temperature of the indoor air is relatively low, suggesting that the key indoor unit is less likely to experience condensation, this embodiment of the present application may not need to control the fan speed of the outdoor unit.

Additionally, it is understood that the specific value of the preset temperature may be pre-defined, which is not specifically limited in this embodiment of the present application. Additionally, the specific value of the preset humidity may be pre-defined, which is not specifically limited in this embodiment of the present application.

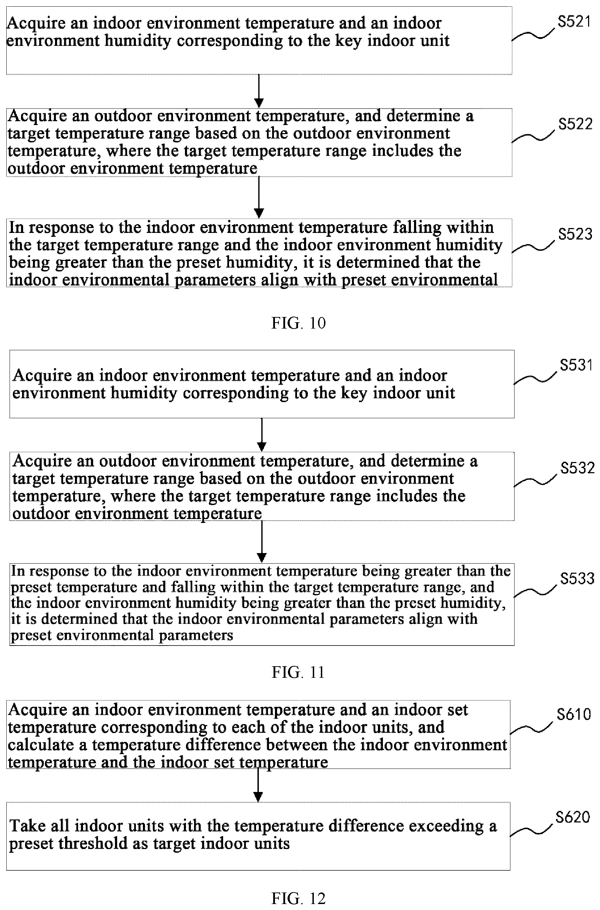

Referring to FIG. 10, it is a flowchart of another control method of a multi-split air conditioner according to an embodiment of the present application. The method for obtaining the indoor environmental parameters, as well as the judgmental logic between the indoor environmental parameters and the preset environmental parameters in FIGS. 4 and 6, may include, but not limited to, step S521, step S522 and step S523.

At S521, an indoor environment temperature and an indoor environment humidity corresponding to the key indoor unit are acquired.

At S522, an outdoor environment temperature is acquired, and a target temperature range is determined based on the outdoor environment temperature. Here, the target temperature range includes the outdoor environment temperature.

At S523, in response to the indoor environment temperature falling within the target temperature range and the indoor environment humidity being greater than the preset humidity, it is determined that the indoor environmental parameters align with preset environmental parameters.

In some embodiments, to determine whether the key indoor unit is currently prone to condensation, this embodiment of the present application may collect an indoor environment humidity and an indoor environment temperature of the environment where the key indoor unit is located. In response to the indoor environment humidity being greater than a preset humidity and the indoor environment temperature falling within a target temperature range, which indicates that the condensation temperature of the indoor air is relatively high, indicating that the key indoor unit is prone to experience condensation, this embodiment of the present application will control the fan speed of the outdoor unit based on the evaporator reference temperature to increase the evaporator temperature of the key indoor unit for preventing condensation of the key indoor unit while maintaining cooling efficiency.

Additionally, it should be noted that in response to the indoor environment humidity being below the preset humidity and the indoor environment temperature being lower than the target temperature range, which indicates that the condensation temperature of the indoor air is relatively low, suggesting that the key indoor unit is less likely to experience condensation, this embodiment of the present application may not need to control the fan speed of the outdoor unit.

Additionally, it should be noted that the target temperature range is determined based on the outdoor environment temperature. For example, the outdoor environment temperature + X may be set as the upper limit of the target temperature range, and the outdoor environment temperature - X may be set as the lower limit. Here, X is a positive number.

Additionally, it is understood that the specific value of the preset humidity may be pre-defined, which is not specifically limited in this embodiment of the present application.

Referring to FIG. 11, it is a flowchart of another control method of a multi-split air conditioner according to an embodiment of the present application. The method for obtaining the indoor environmental parameters, as well as the judgmental logic between the indoor environmental parameters and the preset environmental parameters in FIGS. 4 and 6, may include, but not limited to, step S531, step S532 and step S533.

At S531, an indoor environment temperature and an indoor environment humidity corresponding to the key indoor unit are acquired.

At S532, an outdoor environment temperature is acquired, and a target temperature range is determined based on the outdoor environment temperature. Here, the target temperature range includes the outdoor environment temperature.

At S533, in response to the indoor environment temperature being greater than the preset temperature and falling within the target temperature range, and the indoor environment humidity being greater than the preset humidity, it is determined that the indoor environmental parameters align with preset environmental parameters.

In some embodiments, to determine whether the key indoor unit is currently prone to condensation, this embodiment of the present application may collect an indoor environment humidity and an indoor environment temperature of the environment where the key indoor unit is located. In response to the indoor environment humidity being greater than a preset humidity and the indoor environment temperature falling within a target temperature range and being greater than a preset temperature, which indicates that the condensation temperature of the indoor air is relatively high, suggesting that the key indoor unit is prone to experience condensation, this embodiment of the present application will control the fan speed of the outdoor unit based on the evaporator reference temperature to increase the evaporator temperature of the key indoor unit for preventing condensation of the key indoor unit while maintaining cooling efficiency.

Additionally, it should be noted that in response to the indoor environment humidity being below the preset humidity and the indoor environment temperature being lower than the target temperature range and being below the preset temperature, which indicates that the condensation temperature of the indoor air is relatively low, suggesting that the key indoor unit is less likely to experience condensation, this embodiment of the present application may not need to control the fan speed of the outdoor unit.

Additionally, it should be noted that the target temperature range is determined based on the outdoor environment temperature. For example, the outdoor environment temperature + X may be set as the upper limit of the target temperature range, and the outdoor environment temperature - X may be set as the lower limit. Here, X is a positive number.

Additionally, it is understood that the specific value of the preset temperature may be pre-defined, which is not specifically limited in this embodiment of the present application. Additionally, the specific value of the preset humidity may be pre-defined, which is not specifically limited in this embodiment of the present application.

Referring to FIG. 12, it is a flowchart of another control method of a multi-split air conditioner according to an embodiment of the present application. Before acquiring an indoor unit capacity and evaporator reference temperature of target indoor unit(s) in S100, the control method may further include, but not limited to, step S610 and step S620.

At S610, an indoor environment temperature and an indoor set temperature corresponding to each of the indoor units are acquired, and a temperature difference between the indoor environment temperature and the indoor set temperature is calculated.

At S620, all indoor units with the temperature difference exceeding a preset threshold are taken as target indoor units.

Specifically, to determine the target indoor units, that is, indoor units with capacity demand, an indoor set temperature and an indoor environment temperature corresponding to each indoor unit may be obtained. By subtracting the indoor set temperature from the indoor environment temperature, a temperature difference is calculated. In response to the temperature difference exceeding a preset threshold, it indicates that the indoor temperature is too high and the indoor unit requires the outdoor unit to operate and provide enough work load so that indoor temperature meets user needs or functional requirements. Therefore, those indoor units are sorted as indoor units with capacity demand.

It is understood that if the temperature difference being less than or equal to the preset threshold, it indicates that the indoor temperature is appropriate, and the indoor environment has satisfied user or functional needs. Hence, the indoor unit does not require the outdoor unit to provide work load, and consequently, the indoor unit does not belong to the category of indoor units with capacity demand.

Additionally, it is understood that the specific value of the preset threshold may be pre-defined, which is not specifically limited in this embodiment of the present application.

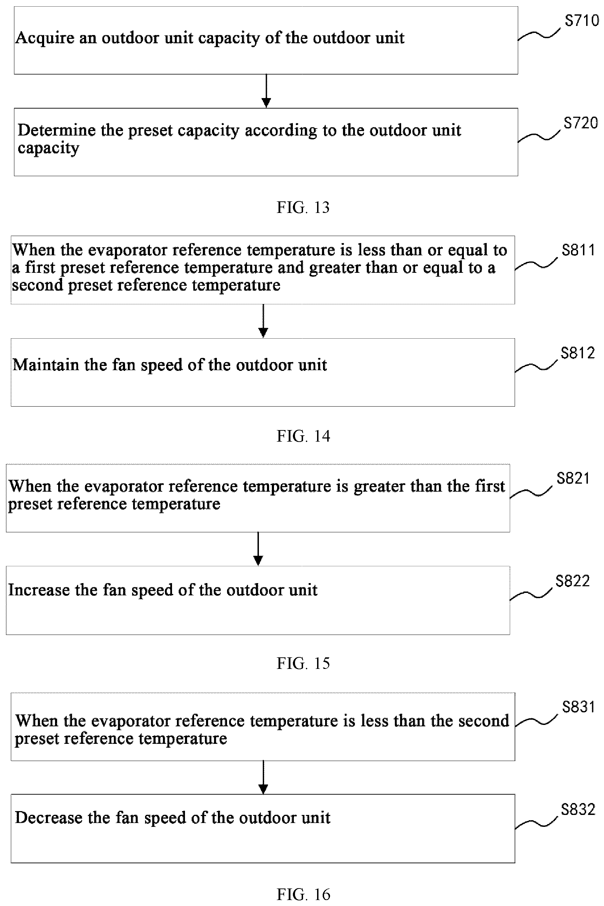

Referring to FIG. 13, it is a flowchart of another control method of a multi-split air conditioner according to an embodiment of the present application. Determining the predefined capacity may include, but not limited to, step S710 and step S720.

At S710, an outdoor unit capacity of the outdoor unit is acquired.

At S720, the predefined capacity is determined according to the outdoor unit capacity.

In some embodiments, the predefined capacity may be determined based on the outdoor unit capacity of the outdoor unit. For instance, the predefined capacity may be set to 25% of the outdoor unit capacity or 20% of the outdoor unit capacity, which is not specifically limited in this embodiment of the present application.

Additionally, it should be noted that controlling a fan speed of the outdoor unit based on the evaporator reference temperature in S200 may include, but not limited to, three implementation scenarios illustrated in FIG. 14 to FIG. 16.

Referring to FIG. 14, it is a flowchart of another control method of a multi-split air conditioner according to an embodiment of the present application. Controlling a fan speed of the outdoor unit based on the evaporator reference temperature in S200 may include, but not limited to, step S811 and step S812.

At S811, it is determined that the evaporator reference temperature is less than or equal to a first preset reference temperature and greater than or equal to a second preset reference temperature.

At S812, the fan speed of the outdoor unit is maintained.

In some embodiments, the relationship between the first preset reference temperature and the second preset reference temperature in terms of magnitude is as follows: the first preset reference temperature is higher than the second preset reference temperature. In response to the evaporator reference temperature being between the first preset reference temperature and the second preset reference temperature, which indicates that the current evaporator reference temperature will not cause condensation in the indoor unit and will provide a certain level of cooling effect, this embodiment of the present application may maintain the fan speed of the outdoor unit constant.

Additionally, it is understood that the specific value of the first preset reference temperature may be pre-defined, which is not specifically limited in this embodiment of the present application. Additionally, the specific value of the second preset reference temperature may be pre-defined, which is not specifically limited in this embodiment of the present application.

Here, in an embodiment, the second preset reference temperature may be a dew point temperature, which may be calculated based on the indoor air temperature and the indoor air humidity.

Referring to FIG. 15, it is a flowchart of another control method of a multi-split air conditioner according to an embodiment of the present application. Controlling a fan speed of the outdoor unit based on the evaporator reference temperature in S200 may include, but not limited to, step S821 and step S822.

At S821, it is determined that the evaporator reference temperature is greater than the first preset reference temperature.

At S822, the fan speed of the outdoor unit is increased.

In some embodiments, in response to the evaporator reference temperature being greater than the first preset reference temperature, which indicates that the current evaporator reference temperature is too high and may not be able to meet the cooling needs of users, this embodiment of the present application needs to increase the fan speed of the outdoor unit to enhance the cooling effect of the indoor unit.

Additionally, it is understood that the specific value of the first preset reference temperature may be pre-defined, which is not specifically limited in this embodiment of the present application.

Referring to FIG. 16, it is a flowchart of another control method of a multi-split air conditioner according to an embodiment of the present application. Controlling a fan speed of the outdoor unit based on the evaporator reference temperature in S200 may include, but not limited to, step S831 and step S832.

At S831, it is determined that the evaporator reference temperature is less than the second preset reference temperature.

At S832, the fan speed of the outdoor unit is decreased.

In some embodiments, in response to the evaporator reference temperature being less than the second preset reference temperature, which indicates that the current evaporator reference temperature is low and may cause condensation in the indoor unit, this embodiment of the present application needs to decrease the fan speed of the outdoor unit to prevent condensation.

Additionally, the specific value of the second preset reference temperature may be pre-defined, which is not specifically limited in this embodiment of the present application. In an embodiment, the second preset reference temperature may be a dew point temperature, which may be calculated based on the indoor air temperature and the indoor air humidity.

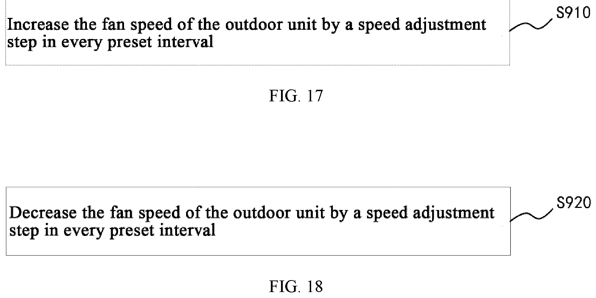

Referring to FIG. 17, it is a flowchart of another control method of a multi-split air conditioner according to an embodiment of the present application. Increasing the fan speed of the outdoor unit in S822 may include, but not limited to, step S910.

At S910, the fan speed of the outdoor unit is increased by a speed adjustment step in every preset interval.

In some embodiments, during the period of increasing the fan speed of the outdoor unit, in order to avoid excessive or rapid adjustment, this embodiment of the present application may increase the fan speed of the outdoor unit by a certain speed adjustment step after each preset period of time.

Additionally, it is understood that the specific value of the preset interval may be pre-defined, which is not specifically limited in this embodiment of the present application. Additionally, the specific value of the speed adjustment step may be pre-defined, which is not specifically limited in this embodiment of the present application.

Referring to FIG. 18, it is a flowchart of another control method of a multi-split air conditioner according to an embodiment of the present application. Increasing the fan speed of the outdoor unit in S822 may include, but not limited to, step S920.

At S920, the fan speed of the outdoor unit is decreased by a speed adjustment step in every preset interval.

In some embodiments, during the period of decreasing the fan speed of the outdoor unit, to avoid excessive or rapid adjustment, this embodiment of the present application may decrease the fan speed of the outdoor unit by a certain speed adjustment step after each preset period of time.

Additionally, it is understood that the specific value of the preset interval may be pre-defined, which is not specifically limited in this embodiment of the present application. Additionally, the specific value of the speed adjustment step may be pre-defined, which is not specifically limited in this embodiment of the present application.

Additionally, the preset interval corresponding to increasing the fan speed of the outdoor unit may be the same as, or different from, the preset interval corresponding to decreasing the fan speed of the outdoor unit.

Additionally, the speed adjustment step corresponding to increasing the fan speed of the outdoor unit may be the same as, or different from, the speed adjustment step corresponding to decreasing the fan speed of the outdoor unit.

Based on the control method of the multi-split air conditioner described in the above embodiments, an overall embodiment of a control method of a multi-split air conditioner of the present application will be proposed below.

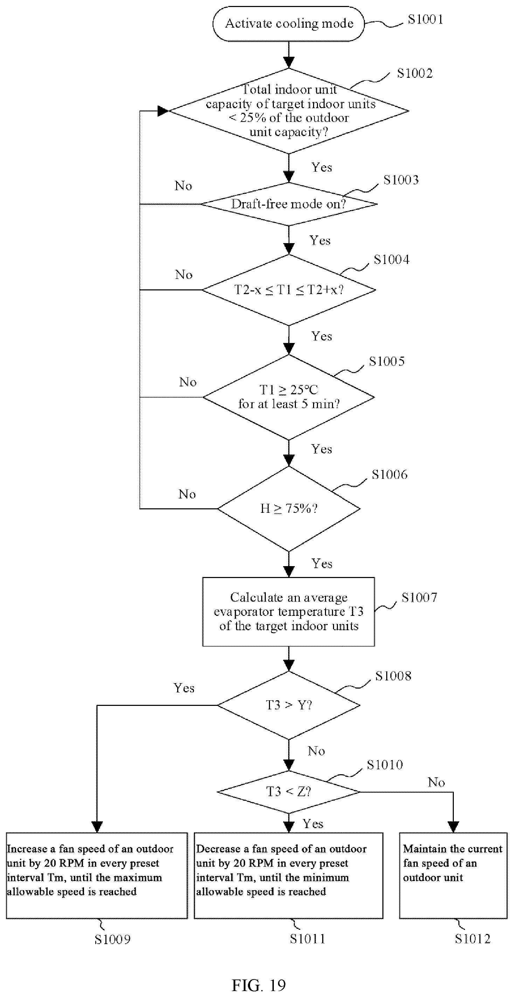

Referring to FIG. 19, it is an overall flowchart of a control method of a multi-split air conditioner according to an embodiment of the present application. The overall flow includes, but not limited to, steps S1001 to S1012.

At S1001, a cooling mode is activated.

At S1002, whether the total indoor unit capacity of indoor units with capacity demand is less than or equal to 25% of the outdoor unit capacity is determined; in response to the total indoor unit capacity of target indoor units ≤ 25% of the outdoor unit capacity, the method proceeds to S1003, and otherwise, returns to S1002.

At S1003, whether a key indoor unit is in a draft-free mode is determined; if so, the method proceeds to S1004, and otherwise, returns to S1002.

At S1004, whether the indoor temperature T1 is greater than or equal to the outdoor temperature T2-X and less than or equal to the outdoor temperature T2+X is determined; if so, the method proceeds to S1005, and otherwise, returns to S1002, where X is a positive number.

At S1005, whether the indoor temperature T1 is greater than or equal to 25°C and lasts for at least 5 minutes is determined; if so, the method proceeds to S1006, and otherwise, returns to S1002.

At S1006, whether the indoor humidity H is greater than or equal to 75% and lasts for at least 5 minutes is determined; if so, the method proceeds to S1007, and otherwise returns to S1002.

At S1007, an average evaporator temperature T3 of the target indoor units is calculated.

At S1008, whether the average evaporator temperature T3 is greater than a first preset average evaporator temperature Y is determined; if so, the method proceeds to S1009, and otherwise, proceeds to S1010.

At S1009, a fan speed of an outdoor unit is increased by 20 RPM in every preset interval Tm, until the maximum allowable speed is reached.

At S1010, whether the average evaporator temperature T3 is less than a second preset average evaporator temperature Z is determined; if so, the method proceeds to S1011, and otherwise, proceeds to S1012.

At S1011, the fan speed of the outdoor unit is decreased by 20 RPM in every preset interval Tm, until the minimum allowable speed is reached.

At S1012, the current fan speed of the outdoor unit is maintained.

According to the technical scheme of this embodiment of the present application, in the draft-free cooling mode after a compressor is started, when the indoor humidity is high and the capacity demand of a single indoor unit is far less than that of all indoor units operating simultaneously, the fan speed of the outdoor unit may reduce for effectively decreasing the heat exchange on the outdoor side, thereby reducing the cooling effect and preventing excessive cooling that may cause condensation in the indoor units, which may negatively impact the user experience.

Based on the control method of the multi-split air conditioner described above, various embodiments of a controller, a multi-split air conditioner and a computer-readable storage medium of the present application are presented below.

In addition, an embodiment of the present application provides a controller, including: a processor, a memory, and a computer program stored in the memory and executable by the processor.

The processor and the memory may be connected by a bus or by other means.

It should be noted that the controller in this embodiment may include the processor and the memory as in the embodiment shown in FIG. 1. They belong to the same inventive concept, so both of them have the same implementation principle and beneficial effects, which will not be repeated here.

The non-transitory software program and instructions required to implement the control method of the multi-split air conditioner of the above embodiments are stored in the memory, and when executed by the processor, implement the control method of the multi-split air conditioner in the above embodiment.

According to the technical scheme of this embodiment of the present application, for a multi-split air conditioner, when the total indoor unit capacity of target indoor units with capacity demand is less than or equal to a predefined capacity, the energy provided by an outdoor unit will still exceed the demand of the target indoor units. Therefore, to reduce the occurrence of condensation in the indoor units, the embodiment of the present application controls the fan speed of the outdoor unit based on the evaporator reference temperature. By adjusting the fan speed of the outdoor unit, the heat exchange capacity of the outdoor unit can be lowered, which in turn reduces the cooling capacity of the indoor units, thereby decreasing the likelihood of condensation.

It is worth noting that since the controller in this embodiment of the present application can implement the control method of the multi-split air conditioner in the above embodiments, one can refer to the specific implementation and technical effects of the control method of the multi-split air conditioner in any of the above embodiments for the specific implementation and technical effects of the controller in this embodiment of the present application.

In addition, an embodiment of the present application provides a multi-split air conditioner including, but not limited to, the controller in the above embodiments.

According to the technical scheme of this embodiment of the present application, for a multi-split air conditioner, when the total indoor unit capacity of target indoor units with capacity demand is less than or equal to a predefined capacity, the energy provided by an outdoor unit will still exceed the demand of the target indoor units. Therefore, to reduce the occurrence of condensation in the indoor units, the embodiment of the present application controls the fan speed of the outdoor unit based on the evaporator reference temperature. By adjusting the fan speed of the outdoor unit, the heat exchange capacity of the outdoor unit can be lowered, which in turn reduces the cooling capacity of the indoor units, thereby decreasing the likelihood of condensation.

It is worth noting that since the multi-split air conditioner in this embodiment of the present application includes the controller in the above embodiments and the controller can implement the control method of the multi-split air conditioner in any of the above embodiments, one can refer to the specific implementation and technical effects of the control method of the multi-split air conditioner in any of the above embodiments for the specific implementation and technical effects of the multi-split air conditioner in this embodiment of the present application.

Furthermore, an embodiment of the present application also provides a computer-readable storage medium storing computer-executable instructions for performing the control method described above, for example, performing the method steps in FIG. 3 to FIG. 19 described above.

According to the technical scheme of this embodiment of the present application, for a multi-split air conditioner, when the total indoor unit capacity of target indoor units with capacity demand is less than or equal to a predefined capacity, the energy provided by an outdoor unit will still exceed the demand of the target indoor units. Therefore, to reduce the occurrence of condensation in the indoor units, the embodiment of the present application controls the fan speed of the outdoor unit based on the evaporator reference temperature. By adjusting the fan speed of the outdoor unit, the heat exchange capacity of the outdoor unit can be lowered, which in turn reduces the cooling capacity of the indoor units, thereby decreasing the likelihood of condensation.

It is worth noting that since the computer-readable storage medium in this embodiment of the present application can implement the control method of the multi-split air conditioner in the above embodiments, one can refer to the specific implementation and technical effects of the control method of the multi-split air conditioner in any of the above embodiments for the specific implementation and technical effects of the computer-readable storage medium in this embodiment of the present application.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes, but not limited to, a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and can include any information delivery media.

The above is a detailed description of preferred embodiments of the present application. However, the present application is not limited to the above-mentioned embodiments. Those of ordinary skill in the art can also make various equivalent modifications or replacements without departing from the scope of the present application, and these equivalent modifications or replacements are all included in the scope defined by the claims of the present application.

## Claims

1. A control method of a multi-split air conditioner, wherein the multi-split air conditioner comprises an outdoor unit and a plurality of indoor units, and the control method comprises the following steps:
in a cooling mode, acquiring an indoor unit capacity and an evaporator reference temperature of a target indoor unit, the target indoor unit comprising one or more of the plurality of indoor units; and
in response to the indoor unit capacity being less than or equal to a predefined capacity, controlling a fan speed of the outdoor unit based on the evaporator reference temperature.

2. The control method of claim 1, wherein the controlling a fan speed of the outdoor unit based on the evaporator reference temperature comprises one of the following steps:
determining a key indoor unit from the target indoor unit and acquiring an air delivery speed and indoor environmental parameters corresponding to the key indoor unit, and in response to the air delivery speed being less than a preset speed and the indoor environmental parameters aligning with preset environmental parameters, controlling the fan speed of the outdoor unit based on the evaporator reference temperature;
determining a key indoor unit from the target indoor unit and acquiring an air delivery speed corresponding to the key indoor unit, and in response to the air delivery speed being less than a preset speed, controlling the fan speed of the outdoor unit based on the evaporator reference temperature; or
determining a key indoor unit from the target indoor unit and acquiring indoor environmental parameters corresponding to the key indoor unit, and in response to the indoor environmental parameters aligning with preset environmental parameters, controlling the fan speed of the outdoor unit based on the evaporator reference temperature.

3. The control method of claim 2, wherein the determining a key indoor unit from the target indoor unit comprises at least one of the following steps:
when the target indoor unit includes one indoor unit, taking the target indoor unit as the key indoor unit; or
when the target indoor unit includes a plurality of the indoor units, acquiring each indoor environment humidity corresponding to the individual target indoor units, and selecting the indoor unit having the highest indoor environment humidity as the key indoor unit.

4. The control method of claim 2, wherein in the case of acquiring indoor environmental parameters corresponding to the key indoor unit, the acquiring indoor environmental parameters corresponding to the key indoor unit comprises: acquiring an indoor environment temperature and an indoor environment humidity corresponding to the key indoor unit; and
the indoor environmental parameters aligning with preset environmental parameters comprises one of the following conditions:
the indoor environment temperature being greater than a preset temperature and the indoor environment humidity being greater than a preset humidity;
the indoor environment temperature falling within a target temperature range and the indoor environment humidity being greater than a preset humidity, the target temperature range comprising an outdoor environment temperature; or
the indoor environment temperature being greater than a preset temperature and falling within a target temperature range, and the indoor environment humidity being greater than a preset humidity, the target temperature range comprising an outdoor environment temperature.

5. The control method of claim 1, wherein before acquiring an indoor unit capacity and an evaporator reference temperature of target indoor unit, the control method further comprises:
acquiring an indoor environment temperature and an indoor set temperature corresponding to each of the indoor units, and calculating a temperature difference between the indoor environment temperature and the indoor set temperature; and
taking all indoor units with the temperature difference exceeding a preset threshold as the target indoor unit.

6. The control method of claim 1, wherein determining the predefined capacity comprises:
acquiring an outdoor unit capacity of the outdoor unit; and
determining the predefined capacity according to the outdoor unit capacity.

7. The control method of claim 1, wherein the controlling a fan speed of the outdoor unit based on the evaporator reference temperature comprises at least one of the following steps:
in response to the evaporator reference temperature being less than or equal to a first preset reference temperature and greater than or equal to a second preset reference temperature, maintaining the fan speed of the outdoor unit, wherein the first preset reference temperature being higher than the second preset reference temperature;
in response to the evaporator reference temperature being greater than the first preset reference temperature, increasing the fan speed of the outdoor unit; or
in response to the evaporator reference temperature being less than the second preset reference temperature, decreasing the fan speed of the outdoor unit.

8. The control method of claim 7, further comprising one of the following steps:
in the case of increasing the fan speed of the outdoor unit, the increasing the fan speed of the outdoor unit comprises: increasing the fan speed of the outdoor unit by a speed adjustment step in every preset interval; or
in the case of decreasing the fan speed of the outdoor unit, the decreasing the fan speed of the outdoor unit comprises: decreasing the fan speed of the outdoor unit by a speed adjustment step in every preset interval.

9. A controller, comprising a memory, a processor, and a computer program stored in the memory and executable by the processor, wherein when the processor executes the computer program, the control method of the multi-split air conditioner of any one of claims 1 to 8 is implemented.

10. A multi-split air conditioner, comprising the controller of claim 9.

11. A computer-readable storage medium storing computer-executable instructions, wherein the computer-executable instructions are configured to enable a computer to implement the control method of the multi-split air conditioner of any one of claims 1 to 8.
